# EUROPEAN PATENT APPLICATION

(11) **EP 4 694 050 A1**
(43) Date of publication of application: **11.02.2026**
(21) Application number: 24795950.5
(22) Date of filing: 18.04.2024
(51) Int. Cl.: H04L 41/06

(54) **FAULT PROCESSING METHOD AND APPARATUS, DEVICE, SYSTEM AND STORAGE MEDIUM**

(30) Priority: 28.04.2023 CN 202310488265
(71) Applicant: Huawei Technologies Co., Ltd., Shenzhen, Guangdong 518129 (CN)
(72) Inventor: YAN, Siyu, Shenzhen, Guangdong 518129 (CN); LIN, Yihong, Shenzhen, Guangdong 518129 (CN); WEN, Huafeng, Shenzhen, Guangdong 518129 (CN); YANG, Juntao, Shenzhen, Guangdong 518129 (CN); WU, Qinzhi, Shenzhen, Guangdong 518129 (CN); ZHENG, Xiaolong, Shenzhen, Guangdong 518129 (CN); CHENG, Pu, Shenzhen, Guangdong 518129 (CN)
(74) Representative: MERH-IP Matias Erny Reichl Hoffmann Patentanwälte PartG mbB
(86) International application number: PCT/CN2024/088646
(87) International publication number: WO 2024/222569

(57) **Abstract**

This application discloses a troubleshooting method, apparatus, device, and system, and a storage medium, and relates to the field of communication technologies. An example in which a first network device performs the method is used. The first network device determines that a network fault occurs, and sends a disconnection request packet corresponding to a first connection to a first node. The first connection is a connection between the first node and another node, the disconnection request packet is compatible with a standard protocol, and the disconnection request packet indicates the first node to disconnect the first connection. In the method, when determining that the network fault occurs, the network device may quickly trigger, by using the disconnection request packet, the first node to disconnect the first connection, so that the first node can quickly sense the fault, thereby improving network reliability. Because the disconnection request packet is compatible with the standard protocol, code, a new protocol, a proprietary protocol, and the like do not need to be configured. Therefore, the method is applicable to a complex service environment of a multi-scenario system, and implementation universality and flexibility are improved.

## Description

This application claims priority to Chinese Patent Application No. 202310488265.X, filed on April 28, 2023 and entitled "TROUBLESHOOTING METHOD, APPARATUS, DEVICE, AND SYSTEM, AND STORAGE MEDIUM", which is incorporated herein by reference in its entirety.

### TECHNICAL FIELD

This application relates to the field of communication technologies, and in particular, to a troubleshooting method, apparatus, device, and system, and a storage medium.

### BACKGROUND

As communication technologies continue to evolve, when a link fault or a device fault occurs on a communication network, a terminal needs to quickly sense occurrence of the fault and ensure that a service can be quickly recovered from the fault.

In a related technology, a fault sensing module is disposed in a terminal, and a network device needs to establish a proprietary protocol with the fault sensing module of the terminal. When sensing that a network fault occurs, the network device actively notifies fault information to the fault sensing module of the terminal, so that the fault sensing module of the terminal recovers a service from the network fault in a timely manner.

However, because the terminal and the network device are usually from different vendors, it is difficult to use a unified proprietary protocol for the terminal and the network device, and consequently, adaptability of the method in the related technology is poor.

### SUMMARY

This application provides a troubleshooting method, apparatus, device, and system, and a storage medium, to perform troubleshooting when it is determined that a network fault occurs.

According to a first aspect, a troubleshooting method is provided. An example in which a first network device performs the method is used. The first network device determines that a network fault occurs, and sends a disconnection request packet corresponding to a first connection to a first node. The first connection is a connection between the first node and another node, the disconnection request packet is compatible with a standard protocol, and the disconnection request packet indicates the first node to disconnect the first connection.

In the method, when determining that the network fault occurs, the network device sends the disconnection request packet to the first node to quickly trigger the first node to disconnect the first connection, so that the first node can quickly sense the fault, thereby improving network reliability. Because the disconnection request packet is compatible with the standard protocol, code, a new protocol, a proprietary protocol, and the like do not need to be configured. Therefore, the method is applicable to a complex service environment of a multi-scenario system, and implementation universality and flexibility are improved.

According to a second aspect, a troubleshooting method is provided. An example in which a target node performs the method is used. The target node determines that a network fault occurs, and sends a disconnection request packet corresponding to a first connection to a first node. The disconnection request packet is compatible with a standard protocol, and the disconnection request packet indicates the first node to disconnect the first connection, where the first connection is a connection established by the first node to the target node, or the first connection is a connection between the first node and another node different from the target node.

In the method, when determining that the network fault occurs, the target node sends the disconnection request packet to the first node to quickly trigger the first node to disconnect the first connection, so that the first node can quickly sense the fault, thereby improving network reliability. Because the disconnection request packet is compatible with the standard protocol, code, a new protocol, a proprietary protocol, and the like do not need to be configured. Therefore, the method is applicable to a complex service environment of a multi-scenario system, and implementation universality and flexibility are improved.

When the first connection is a connection established by the first node to the target node, the first node is an active establishment party of the first connection, and the target node is a passive establishment party of the first connection. In the method, when detecting the network fault, the target node may directly send the disconnection request packet to the first node, and the first node does not need to perform active detection. This saves network resources required by the first node for active detection, improves a fault sensing speed of the first node, and further improves troubleshooting efficiency.

In any possible implementation of the first aspect and the second aspect, the first connection is a connection affected by a network fault, and the connection affected by the network fault may be a connection on which service transmission performance is impaired due to the network fault. In other words, in this method, the disconnection request packet may be quickly sent to an end node corresponding to a connection affected by the network fault, to quickly trigger the end node corresponding to the connection affected by the network fault to perform troubleshooting.

In any possible implementation of the first aspect and the second aspect, the standard protocol includes a remote direct memory access (remote direct memory access, RDMA) protocol or a transmission control protocol (transmission control protocol, TCP), and the disconnection request packet may be a disconnection request (DisconnectRequest) packet of the RDMA protocol or a finish (finish, FIN) packet of the TCP. Because this application is applicable to different standard protocols, flexibility and applicability of the method are high.

In any possible implementation of the first aspect and the second aspect, a manner of determining that the network fault occurs may include: detecting that the network fault occurs. A network fault is determined by detecting the network fault, so that efficiency and accuracy of determining that the network fault occurs are higher.

In any possible implementation of the first aspect and the second aspect, after it is determined that the network fault occurs, the first node may be determined based on device connection information, where the device connection information includes source addresses and destination addresses that separately correspond to a plurality of connections. Because the device connection information includes a source address and a destination address of the first connection, the first node that corresponds to the first connection and that is determined based on the device connection information is more accurate.

In any possible implementation of the first aspect and the second aspect, a manner of determining that the network fault occurs may alternatively include: receiving a notification packet sent by a second network device, where the notification packet includes fault notification information, and the fault notification information indicates that the network fault occurs; and determining, based on the fault notification information, that the network fault occurs. Compared with the manner of detecting the network fault, in the manner of receiving the notification packet, because a notification packet sent by each network device in a network may be received, a network fault in a larger range may be determined, and network reliability is further improved.

In any possible implementation of the first aspect and the second aspect, the notification packet further includes faulty connection information, where the faulty connection information indicates the first connection. After it is determined that the network fault occurs, the first node may be determined based on the faulty connection information and device connection information, where the device connection information includes source addresses and destination addresses that separately correspond to a plurality of connections. The first node may be accurately determined based on the device connection information and the first connection indicated by the faulty connection information. In addition, because no network fault occurs on the first network device, a success rate of sending the disconnection request packet to the first node is increased.

In any possible implementation of the first aspect and the second aspect, the device connection information is obtained based on a packet exchanged in a process of establishing a connection between nodes; or the device connection information is obtained based on local connection information sent by the first node. This application provides different manners of obtaining the device connection information, so that the manner of obtaining the device connection information is more flexible.

In any possible implementation of the first aspect and the second aspect, the method further includes: receiving a disconnection response packet sent by the first node, where the disconnection response packet is compatible with the standard protocol, and the disconnection response packet is a response packet for the disconnection request packet. The disconnection response packet is a disconnect reply (DisconnectReply) packet of the RDMA protocol or a finish acknowledge (finish acknowledge, FIN-ACK) packet of the TCP.

Transmission reliability of the disconnection response packet is improved by using a response mechanism of the disconnection response packet. Because the disconnection response packet is also compatible with the standard protocol, the method is also applicable to a complex service environment of a multi-scenario system, and implementation universality and flexibility of the method are improved.

In any possible implementation of the first aspect and the second aspect, the method further includes: receiving a connection establishment request packet sent by the first node, where the connection establishment request packet is for re-establishing the first connection; and sending a connection establishment reject packet corresponding to the connection establishment request packet to the first node. When identifying that the network fault still exists, the first network device may send a connection establishment reject packet corresponding to the connection establishment request packet to the first node. Alternatively, if the first network device considers that the network fault still exists within reference duration after sending the disconnection request packet to the first node, the first network device sends a connection establishment reject packet corresponding to the connection establishment request packet to the first node. Alternatively, the first network device sends a connection establishment reject packet corresponding to the connection establishment request packet to the first node within reference duration after sending the disconnection request packet to the first node and when the first network device identifies that the network fault still exists. When the first node re-establishes the first connection, because the network fault still exists, the first network device may directly reject the request for establishing the first connection, thereby improving processing efficiency of connection establishment, and improving accuracy of connection establishment.

According to a third aspect, a troubleshooting method is provided. An example in which a first node performs the method is used. The first node receives a disconnection request packet corresponding to a first connection, where the first connection is a connection between the first node and another node, and the disconnection request packet is compatible with a standard protocol; and the first node disconnects the first connection based on the disconnection request packet.

In the method, the first node may quickly sense, by receiving the disconnection request packet, that the first connection is faulty, and disconnect the first connection, thereby implementing quick service fault recovery. Because the disconnection request packet is compatible with the standard protocol, code, a new protocol, a proprietary protocol, and the like do not need to be configured. Therefore, the method is applicable to a complex service environment of a multi-scenario system, and implementation universality and flexibility of the method are improved.

In a possible implementation, the disconnection request packet is a DisconnectRequest packet of an RDMA protocol or a FIN packet of a TCP.

In a possible implementation, after the first node receives the disconnection request packet corresponding to the first connection, the first node sends a disconnection response packet, where the disconnection response packet is compatible with the standard protocol, and the disconnection response packet is a response packet for the disconnection request packet.

In a possible implementation, the disconnection response packet is a DisconnectReply packet of the RDMA protocol or a FIN-ACK packet of the TCP.

In a possible implementation, after the first node receives the disconnection request packet corresponding to the first connection, the first node sends a connection establishment request packet, where the connection establishment request packet is for re-establishing the first connection; and the first node receives a connection establishment reject packet corresponding to the connection establishment request packet.

In a possible implementation, after the first node disconnects the first connection based on the disconnection request packet, the first node switches, to a second connection for transmission, a service transmitted over the first connection, where the second connection is a connection that is not affected by a network fault. In this way, service transmission performance on the first connection is ensured, and damage caused by a network fault to a service is reduced.

According to a fourth aspect, a troubleshooting apparatus is provided. The apparatus is used in a first network device, and the apparatus includes:
a transceiver module, configured to perform a receiving and/or sending related operation performed by the first network device according to any one of the first aspect or the possible implementations of the first aspect; and
a processing module, configured to perform an operation other than the receiving and/or sending related operation performed by the first network device according to any one of the first aspect or the possible implementations of the first aspect.

In a possible implementation, the transceiver module includes a receiving module and/or a sending module. The receiving module is configured to perform a receiving related operation, and the sending module is configured to perform a sending related operation.

In a possible implementation, the processing module is configured to determine that a network fault occurs.

The transceiver module is configured to send a disconnection request packet corresponding to a first connection to a first node, where the first connection is a connection between the first node and another node, the disconnection request packet is compatible with a standard protocol, and the disconnection request packet indicates the first node to disconnect the first connection.

According to a fifth aspect, a troubleshooting apparatus is provided. The apparatus is used in a target node, and the apparatus includes:
a transceiver module, configured to perform a receiving and/or sending related operation performed by the target node according to any one of the second aspect or the possible implementations of the second aspect; and
a processing module, configured to perform an operation other than the receiving and/or sending related operation performed by the target node according to any one of the second aspect or the possible implementations of the second aspect.

In a possible implementation, the transceiver module includes a receiving module and/or a sending module. The receiving module is configured to perform a receiving related operation, and the sending module is configured to perform a sending related operation.

In a possible implementation, the processing module is configured to determine that a network fault occurs.

The transceiver module is configured to send a disconnection request packet corresponding to a first connection to a first node, where the disconnection request packet is compatible with a standard protocol, and the disconnection request packet indicates the first node to disconnect the first connection, where the first connection is a connection established by the first node to the target node, or the first connection is a connection between the first node and another node different from the target node.

In any possible implementation of the fourth aspect and the fifth aspect, the disconnection request packet is a DisconnectRequest packet of an RDMA protocol or a FIN packet of a TCP.

In any possible implementation of the fourth aspect and the fifth aspect, the processing module is configured to detect that the network fault occurs.

In any possible implementation of the fourth aspect and the fifth aspect, the processing module is further configured to determine the first node based on device connection information, where the device connection information includes source addresses and destination addresses that separately correspond to a plurality of connections.

In any possible implementation of the fourth aspect and the fifth aspect, the transceiver module is configured to receive a notification packet sent by a second network device, where the notification packet includes fault notification information, and the fault notification information indicates that the network fault occurs.

The processing module is configured to determine, based on the fault notification information, that the network fault occurs.

In any possible implementation of the fourth aspect and the fifth aspect, the notification packet further includes faulty connection information, where the faulty connection information indicates the first connection. The processing module is further configured to determine the first node based on the faulty connection information and device connection information, where the device connection information includes source addresses and destination addresses that separately correspond to a plurality of connections.

In any possible implementation of the fourth aspect and the fifth aspect, the device connection information is obtained based on a packet exchanged in a process of establishing a connection between nodes; or the device connection information is obtained based on local connection information sent by the first node.

In any possible implementation of the fourth aspect and the fifth aspect, the transceiver module is further configured to receive a disconnection response packet sent by the first node, where the disconnection response packet is compatible with the standard protocol, and the disconnection response packet is a response packet for the disconnection request packet.

In any possible implementation of the fourth aspect and the fifth aspect, the disconnection response packet is a DisconnectReply packet of the RDMA protocol or a FIN-ACK packet of the TCP.

In any possible implementation of the fourth aspect and the fifth aspect, the transceiver module is further configured to: receive a connection establishment request packet sent by the first node, where the connection establishment request packet is for re-establishing the first connection; and send a connection establishment reject packet corresponding to the connection establishment request packet to the first node.

According to a sixth aspect, a troubleshooting apparatus is provided. The apparatus is used in a first node, and the apparatus includes:
a transceiver module, configured to perform a receiving and/or sending related operation performed by the first node according to any one of the third aspect or the possible implementations of the third aspect; and
a processing module, configured to perform an operation other than the receiving and/or sending related operation performed by the first node according to any one of the third aspect or the possible implementations of the third aspect.

In a possible implementation, the transceiver module includes a receiving module and/or a sending module. The receiving module is configured to perform a receiving related operation, and the sending module is configured to perform a sending related operation.

In a possible implementation, the transceiver module is configured to receive a disconnection request packet corresponding to a first connection, where the first connection is a connection between the first node and another node, and the disconnection request packet is compatible with a standard protocol.

The processing module is configured to disconnect the first connection based on the disconnection request packet.

In a possible implementation, the disconnection request packet is a DisconnectRequest packet of an RDMA protocol or a FIN packet of a TCP.

In a possible implementation, the transceiver module is further configured by the first node to send a disconnection response packet, where the disconnection response packet is compatible with the standard protocol, and the disconnection response packet is a response packet for the disconnection request packet.

In a possible implementation, the disconnection response packet is a DisconnectReply packet of the RDMA protocol or a FIN-ACK packet of the TCP.

In a possible implementation, the transceiver module is further configured to: send a connection establishment request packet, where the connection establishment request packet is for re-establishing the first connection; and receive a connection establishment reject packet corresponding to the connection establishment request packet.

In a possible implementation, the processing module is further configured by the first node to switch, to a second connection for transmission, a service transmitted over the first connection, where the second connection is a connection that is not affected by a network fault.

According to a seventh aspect, a troubleshooting device is provided. The device includes a processor, the processor is coupled to a memory, the memory stores at least one program instruction or code, and the at least one program instruction or the code is loaded and executed by the processor, to enable the device to implement the troubleshooting method according to the first aspect.

Optionally, there are one or more processors, and there are one or more memories.

Optionally, the memory may be integrated with the processor, or the memory and the processor are separately disposed.

**In** a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to an eighth aspect, a troubleshooting system is provided. The troubleshooting system includes a first network device and a first node.

The first network device is configured to perform the method according to any one of the first aspect or the possible implementations of the first aspect, and the first node is configured to perform the method according to any one of the third aspect or the possible implementations of the third aspect.

According to a ninth aspect, a troubleshooting system is provided. The troubleshooting system includes a target node and a first node.

The target node is configured to perform the method according to any one of the second aspect or the possible implementations of the second aspect, and the first node is configured to perform the method according to any one of the third aspect or the possible implementations of the third aspect.

According to a tenth aspect, a computer-readable storage medium is provided. The storage medium stores at least one instruction, and the instruction is loaded and executed by a processor, to enable a computer to implement the method according to any one of the first aspect or the possible implementations of the first aspect, implement the method according to any one of the second aspect or the possible implementations of the second aspect, or implement the method according to any one of the third aspect or the possible implementations of the third aspect.

According to an eleventh aspect, a computer program (product) is provided, where the computer program (product) includes computer program code. When the computer program code is run by a computer, the computer is enabled to implement the method according to any one of the first aspect or the possible implementations of the first aspect, implement the method according to any one of the second aspect or the possible implementations of the second aspect, or implement the method according to any one of the third aspect or the possible implementations of the third aspect.

According to a twelfth aspect, a chip is provided, and includes a processor. The processor is configured to invoke instructions from a memory and run the instructions stored in the memory, to enable a communication device on which the chip is installed to perform the methods in the foregoing aspects.

According to a thirteenth aspect, another chip is provided, and includes an input interface, an output interface, a processor, and a memory. The input interface, the output interface, the processor, and the memory are connected through an internal connection path. The processor is configured to execute code in the memory. When the code is executed, the processor is configured to perform the methods in the foregoing aspects.

It should be understood that, for beneficial effects achieved by the technical solutions of the third aspect to the thirteenth aspect and corresponding possible implementations of the third aspect to the thirteenth aspect of this application, refer to the technical effects of the first aspect, the second aspect, or the corresponding possible implementations of the first aspect or the second aspect. Details are not described herein again.

### BRIEF DESCRIPTION OF DRAWINGS

FIG. 1 is a diagram of a networking structure of a network according to an embodiment of this application;
FIG. 2 is a diagram of an implementation environment of a troubleshooting method according to an embodiment of this application;
FIG. 3 is a diagram of interaction of a troubleshooting method according to an embodiment of this application;
FIG. 4 is a diagram of a format of a packet according to an embodiment of this application;
FIG. 5 is a diagram of interaction of another troubleshooting method according to an embodiment of this application;
FIG. 6 is a diagram of a network fault according to an embodiment of this application;
FIG. 7 is a diagram of another network fault according to an embodiment of this application;
FIG. 8 is a diagram of interaction of a troubleshooting process according to an embodiment of this application;
FIG. 9 is a diagram of still another network fault according to an embodiment of this application;
FIG. 10 is a diagram of interaction of another troubleshooting process according to an embodiment of this application;
FIG. 11 is a diagram of a structure of a troubleshooting apparatus according to an embodiment of this application;
FIG. 12 is a diagram of a structure of another troubleshooting apparatus according to an embodiment of this application;
FIG. 13 is a diagram of a structure of still another troubleshooting apparatus according to an embodiment of this application;
FIG. 14 is a diagram of a structure of a troubleshooting device according to an embodiment of this application; and
FIG. 15 is a diagram of a structure of another troubleshooting device according to an embodiment of this application.

### DESCRIPTION OF EMBODIMENTS

To make the objectives, technical solutions, and advantages of this application clearer, the following further describes the implementations of this application in detail with reference to the accompanying drawings.

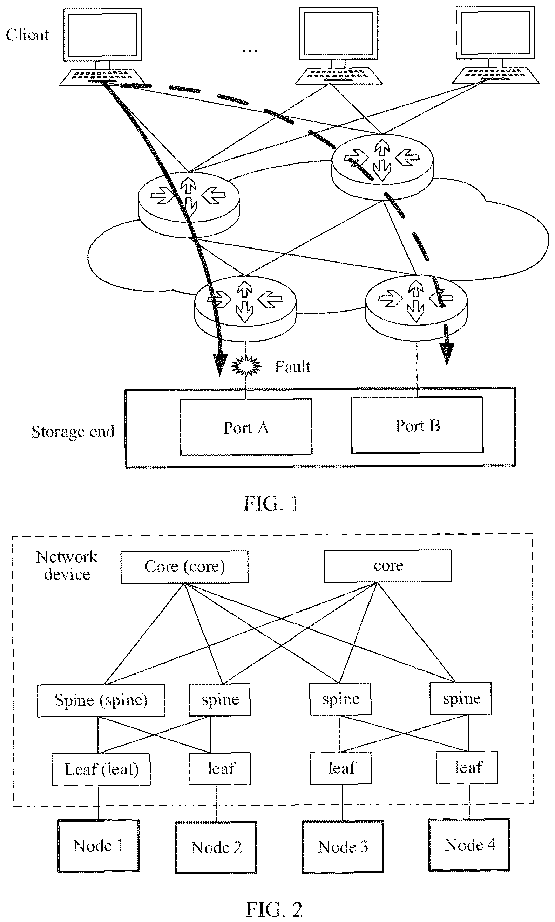

In the field of communication technologies, network reliability means that when a network fault occurs, an end node can quickly sense the network fault, and ensure that a service can be quickly recovered from the network fault. The end nodes may be two ends that transmit a service packet. For example, the end node may be a terminal or a server. For example, refer to a diagram of a networking structure of a network shown in FIG. 1. The networking structure of the network is a storage system of a data center. End nodes in the storage system include at least one client and at least one storage end, and the client performs an operation such as storage, read/write, or access on the storage end via at least one network device.

As shown in FIG. 1, the client may establish two connections to two ports of the storage end. For example, the two ports are a port A and a port B. The port A and the port B back up each other, and a connection B (shown by a dashed arrow in FIG. 1) established with the port B is used as a redundant backup connection. When a network fault occurs on a connection A (shown by a solid arrow in FIG. 1) established with the port A, if the client can sense the network fault, the client switches or migrates a service from the connection A to the connection B, to access the port B, thereby ensuring that the service is not interrupted when the network fault occurs, to meet a network reliability requirement. After sensing a network fault, the end node needs to switch a service over a connection that is being used and that is affected by the network fault to a redundant backup connection. Therefore, a length of time required by the end node to sense the network fault and perform troubleshooting directly affects a degree of impairment of service transmission performance. For example, a faster speed of sensing and processing the network fault by the end node indicates a lower degree of impairment of service transmission performance.

In a related technology, a fault sensing module is disposed in an end node, and a network device needs to establish a proprietary protocol with the fault sensing module of the end node. When sensing that a network fault occurs, the network device actively notifies fault information to the fault sensing module of the end node, so that the fault sensing module of the end node recovers a service from the network fault in a timely manner. Alternatively, a session is established between network devices. After the session is established, a local end that actively establishes the session sends a probe packet to a peer end. If no reply from the peer end for the probe packet is received within detection time, it is considered that the peer end is faulty. In this case, the local end actively changes a route, so that a service can be forwarded from another available physical path, and a fault location is bypassed. Alternatively, the client sends a heartbeat packet to the server. If a heartbeat is not returned for a plurality of times, it is determined that a connection of an original path is abnormal, and the client switches a service to a redundant backup connection.

In a method for establishing a proprietary protocol, because the end node and the network device are usually from different vendors, it is difficult to use a unified proprietary protocol for the end node and the network device, and consequently, adaptability of the method is poor. For the method for switching a physical path by sending a probe packet, a source address and a destination address of a service connection do not change before and after the physical path switching, and the network device reroutes service data on the connection to a new physical path. Therefore, this method is not applicable to a scenario in which there is only one physical path between network devices, and a service cannot be switched to a redundant backup connection between end nodes. For example, in the storage system shown in FIG. 1, if an access link of the port A is faulty, the client needs to switch to and access the backup port B. However, in the method for switching a physical path by sending a probe packet, the destination address of the service connection is not switched to the port B. In this case, the service data still accesses the port A. Therefore, the physical path switching cannot bypass the access link fault of the port A, and service fault recovery cannot be implemented. For the method for sending a heartbeat packet, because a heartbeat packet between end nodes is usually sent every several seconds, and a connection exception needs to be determined through a plurality of heartbeat packets, fault detection time is long, and fault recovery is slow.

An embodiment of this application provides a troubleshooting method. Refer to FIG. 2. FIG. 2 is a diagram of an implementation environment of the troubleshooting method according to an embodiment of this application. As shown in FIG. 2, the implementation environment includes a plurality of nodes and a plurality of network devices. Any two of the plurality of nodes are used as two end nodes for transmitting a service packet, and communicate with each other via a network device. Any node may be a terminal or a server, and any network device may be a switch or a router. In a multi-layer network architecture, the plurality of network devices may include a leaf (leaf) switch at an access stratum, a spine (spine) switch at an aggregation layer, and a core (core) switch at a core layer. In actual deployment, quantities of nodes, leaf switches, spine switches, and core switches may be flexibly adjusted based on factors such as a network scale.

Optionally, any node has capabilities such as fault sensing and connection switching after fault sensing. Any network device is configured to detect a network fault. After detecting a network fault, the network device may directly send a disconnection request packet to a node corresponding to a connection affected by the network fault, so that the node disconnects the faulty connection in a timely manner based on the received disconnection request packet. The connection affected by the network fault may be a connection on which service transmission performance is impaired due to the network fault. Alternatively, information about a detected network fault and a connection affected by the network fault is sent to an agent device, and the agent device sends a disconnection request packet to a node, so that the node disconnects the faulty connection in a timely manner based on the received disconnection request packet. The agent device may be any network device or any node shown in FIG. 2. For example, the agent device is a leaf switch at the access stratum shown in FIG. 2.

An application scenario of the troubleshooting method is not limited in embodiments of this application. Optionally, the application scenario of the method may be a data center network, interconnection between a plurality of data centers, or a wide area network. The method may be for a high-performance service such as distributed machine learning training, distributed storage, artificial intelligence (artificial intelligence, AI), high-performance computing (high performance computing, HPC), or a container.

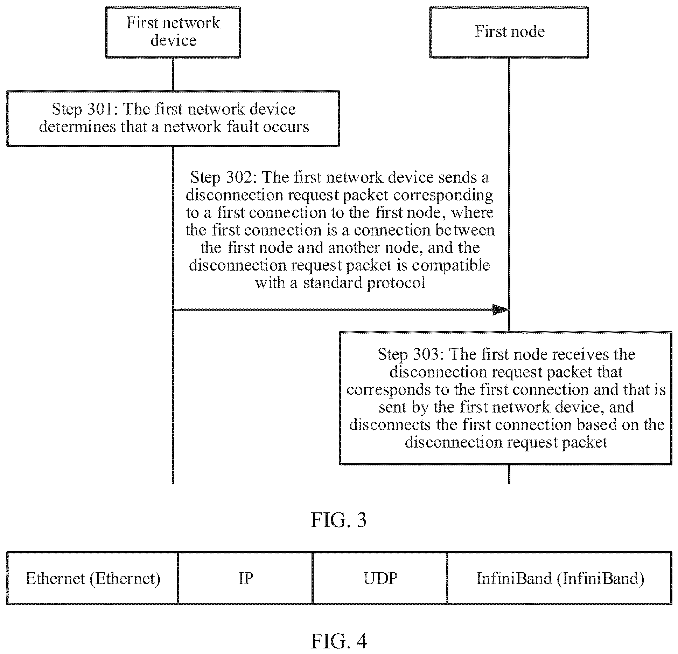

Refer to FIG. 3. FIG. 3 is a diagram of interaction of a troubleshooting method according to an embodiment of this application. The method may be applied to the implementation environment shown in FIG. 2. For example, an example in which any network device and any node shown in FIG. 2 interact to perform the method is used for description. The network device is referred to as a first network device, and the node is referred to as a first node. As shown in FIG. 3, the troubleshooting method includes but is not limited to the following step 301 to step 303.

Step 301: The first network device determines that a network fault occurs.

In this embodiment of this application, the network fault is a fault or an exception that affects service transmission over a connection, such as a fault of an interconnection link between network devices, a bit error rate or an error packet rate on a link being higher than a normal threshold, a priority-based flow control (priority-based flow control, PFC) storm, a cyclic redundancy check (cyclic redundancy check, CRC) error, an access link fault of an end node, a storage fault of an end node, or a connection-level exception. The PFC storm refers to a phenomenon that a network adapter is always in a congested state because network adapter driver software cannot process a receiving queue of the network adapter in a timely manner due to suspension and the like, and consequently the network adapter keeps sending PFC. The storage fault may include a storage network adapter fault, a storage controller system exception, or the like. The normal threshold may be set based on experience or flexibly adjusted based on an application scenario.

Optionally, a manner of determining that the network fault occurs includes but is not limited to the following two manners. Determining manner 1: The first network device detects that the network fault occurs. In the determining manner 1, the first network device serves as a network fault detection device, that is, the first network device has a network fault detection capability, and determines, based on a network fault detection result, that the network fault occurs. In this way, efficiency and accuracy of determining that the network fault occurs are higher.

Determining manner 2: The first network device receives a notification packet sent by a second network device, where the notification packet includes fault notification information, and the fault notification information indicates that the network fault occurs; and the first network device determines, based on the fault notification information, that the network fault occurs. In the determining manner 2, the second network device serves as a network fault detection device, that is, the second network device has a network fault detection capability, and the second network device sends a network fault detection result to the first network device, so that the first network device can determine that the network fault occurs. Because the first network device may receive a notification packet sent by each network device in a network, compared with the manner in which the first network device detects the network fault, this manner can determine a network fault in a larger range.

A packet type of the notification packet includes but is not limited to a link layer discovery protocol (link layer discovery protocol, LLDP) packet, a transmission control protocol (transmission control protocol, TCP) packet, or a user datagram protocol (user datagram protocol, UDP) packet. When the notification packet is an LLDP packet, the fault notification information may be carried in an extended type (type), length (length), and value (value) field (TLV field for short) of the LLDP packet. When the notification packet is a TCP packet, the fault notification information may be carried in a payload (payload) or an option (option) extension header of the TCP packet. When the notification packet is a UDP packet, the fault notification information may be carried in a payload of the UDP packet.

A method for detecting the network fault by the first network device or the second network device is not limited in this embodiment of this application, provided that the foregoing network fault can be detected. For example, detection may be performed based on a port status of a network device, or detection may be performed by using a bidirectional forwarding detection (bidirectional forwarding detection, BFD) method.

Step 302: The first network device sends a disconnection request packet corresponding to a first connection to the first node, where the first connection is a connection between the first node and another node, and the disconnection request packet is compatible with a standard protocol.

In this embodiment of this application, the disconnection request packet includes information indicating the first connection, so that the disconnection request packet can indicate the first node to disconnect the first connection. Because the disconnection request packet is compatible with the standard protocol, the standard protocol is applicable to network devices or nodes from different vendors, so that a proprietary protocol other than the standard protocol does not need to be established between the first network device and the first node. In other words, an operation such as protocol reconstruction or code adaptation does not need to be performed on the first network device or the first node. Therefore, the troubleshooting method provided in this embodiment of this application is easy to deploy, and is applicable to a complex service environment of a multi-scenario system, thereby improving applicability. Optionally, the standard protocol may include an RDMA protocol or a TCP. In this case, the disconnection request packet may be a DisconnectRequest packet of the RDMA protocol or a FIN packet of the TCP.

In this embodiment of this application, the first connection is a connection affected by a network fault, and the connection affected by the network fault may be a connection on which service transmission performance is impaired due to the network fault. Service transmission is performed between any two nodes in the network by using an established connection. The established connection is a logical concept. One connection may correspond to one actual physical path, and one physical path includes at least one network device. Before the first network device sends the disconnection request packet corresponding to the first connection to the first node, the first network device first needs to determine the first connection affected by the network fault and two end nodes connected by the first connection. An end node that initiates establishment of the first connection may be the first node, the other node that passively establishes the first connection may be a second node, and the second node is another node different from the first node. For example, the first node is a client of a storage system, and the second node is a storage server of the storage system.

In a possible implementation, after determining that the two end nodes connected by the first connection are the first node and the second node, the first network device may send the disconnection request packet to both the first node and the second node. If a physical path from the first network device to the second node is unreachable, the first network device sends the disconnection request packet only to the first node. Alternatively, the first network device may determine, based on a connection direction of the first connection and a location of the network fault, an end node to which the first connection the disconnection request packet is sent. For example, if the connection direction of the first connection is from the first node to the first network device and then to the second node, and the location of the network fault is between the first network device and the second node, the first network device sends the disconnection request packet to the first node.

For example, the disconnection request packet is a DisconnectRequest packet of the RDMA protocol. A packet format of the disconnection request packet is shown in FIG. 4, and includes an ethernet (Ethernet) packet header, an internet protocol (internet protocol, IP) packet header, a UDP packet header, and an InfiniBand (InfiniBand) packet header. The InfiniBand packet header includes an attribute identifier (attributed ID), a queue pair (queue pair, QP) number, a local customer identifier (local customer ID, LCID), and a remote customer identifier (remote customer ID, RCID). The attributed ID indicates that an attribute of the packet is a disconnection request. For example, a value of the attributed ID is 0x15 in hexadecimal notation or 21 in decimal notation. The QP number indicates a sequence number of a QP. The LCID represents a source address of the first connection, and the RCID represents a destination address of the first connection. In an example in which a source of the first connection is the first node and a destination of the first connection is the second node, the LCID may indicate an address of the first node, and the RCID may indicate an address of the second node. In this way, the first connection can be indicated by using the QP number, the LCID, and the RCID. Optionally, the InfiniBand packet header may further include a transaction identifier (transaction identifier, TID). Different connections correspond to different TIDs. Therefore, the TID may also indicate the first connection.

In a possible implementation, in addition to sending the disconnection request packet corresponding to the first connection to the first node, the first network device may further send the disconnection request packet corresponding to the first connection to the other end node of the first connection. Optionally, there may be one or more first connections. When there are a plurality of first connections, the first network device may send corresponding disconnection request packets to end nodes respectively corresponding to the plurality of first connections. Therefore, after sensing a network fault, the first network device may send the disconnection request packet to a node corresponding to an affected connection in a timely manner, thereby improving efficiency of sensing the network fault by the node.

Corresponding to the foregoing determining manner 1, a manner in which the first network device determines the first connection and the first node includes the following determining manner 3. Determining manner 3: The first network device determines the first node based on device connection information, where the device connection information includes source addresses and destination addresses that separately correspond to a plurality of connections, and the plurality of connections include the first connection. After detecting that the network fault occurs, the first network device first determines the first connection affected by the network fault, and then determines, based on the maintained device connection information, a source address and a destination address that correspond to the first connection. In this case, the first node may be a node corresponding to the source address or a node corresponding to the destination address. The node corresponding to the source address may be a node that actively establishes or initiates establishment of the first connection, and the node corresponding to the destination address may be a node that passively establishes the first connection.

A manner in which the first network device determines the first connection affected by the network fault is not limited in this embodiment of this application. Optionally, when the network fault is a link fault, a connection that includes the location of the network fault and that is in a physical path is used as the first connection. For example, the first network device determines a faulty port corresponding to the network fault, and queries, based on a correspondence between a port and a connection in the device connection information, a connection corresponding to the faulty port, where the connection corresponding to the faulty port is a connection affected by the network fault. There may be one or more connections affected by the network fault, and the connections affected by the network fault include the first connection. In another possible implementation, when the network fault is a connection exception, the first network device may directly determine the first connection based on a cause of the network fault. For example, the first network device monitors a data transmission status over a connection, and if detecting a connection over which no data is transmitted within reference time, determines the connection as an abnormal connection, where the connection over which no data is transmitted within the reference time is the first connection. The reference time may be set based on experience or flexibly adjusted based on an application scenario.

Corresponding to the foregoing determining manner 2, a manner in which the first network device determines the first connection and the first node includes the following determining manner 4. Determining manner 4: The notification packet that is sent by the second network device and received by the first network device further includes faulty connection information, where the faulty connection information can indicate the first connection, for example, the faulty connection information includes a connection identifier of the first connection. The first network device determines the first node based on the faulty connection information and device connection information. Similarly, the device connection information includes source addresses and destination addresses that separately correspond to a plurality of connections. Because no network fault occurs on the first network device, a success rate of sending the disconnection request packet to the first node is improved.

For a manner of carrying the faulty connection information in the notification packet, refer to the manner of carrying the fault notification information in the notification packet. Details are not described herein again. Optionally, for a manner in which the second network device determines the first connection affected by the network fault in the determining manner 4, refer to the manner in which the first network device determines the first connection affected by the network fault in the determining manner 3. Details are not described herein again. After the second network device determines the first connection affected by the network fault, the second network device sends, to the first network device, the faulty connection information that can indicate the first connection.

In this embodiment of this application, the device connection information maintained by the first network device in the determining manner 3 is referred to as first device connection information, and the device connection information maintained by the second network device in the determining manner 4 is referred to as second device connection information. The first device connection information and the second device connection information may have same or different descriptions for a same connection. When the first device connection information is the same as the second device connection information, the first network device determines the first connection based on the received faulty connection information, and directly determines the first node based on the source address and the destination address that correspond to the first connection in the first device connection information. When the first device connection information is different from the second device connection information, the first network device determines the first connection based on the received faulty connection information, converts the first connection into a corresponding target connection in the first device connection information, and determines the first node based on a source address and a destination address that corresponding to the target connection.

In a possible implementation, the device connection information may be obtained based on a packet exchanged in a process of establishing a connection between nodes. For example, corresponding to the determining manner 1 and the determining manner 3, that the first node actively establishes the first connection to the second node is used as an example. The first node sends, to the second node via the first network device, a connection establishment request packet for establishing the first connection, and the second node returns, to the first node also via the first network device, a connection establishment response packet corresponding to the connection establishment request packet. By parsing the connection establishment request packet and the connection establishment response packet, the first network device can determine that the first connection is successfully established, and obtain the source address and the destination address that correspond to the first connection. In this way, a connection establishment request packet and a corresponding connection establishment response packet that are exchanged by other nodes in a connection establishment process can also be obtained, to obtain a plurality of connections in a physical path that passes through the first network device, and source addresses and destination addresses that separately correspond to the plurality of connections.

Alternatively, the device connection information may be obtained based on local connection information sent by the first node, to avoid a security problem generated in a process of parsing and exchanging a packet. For example, corresponding to the determining manner 2 and the determining manner 4, after the first node successfully establishes the first connection, because the physical path corresponding to the first connection passes through the second network device, the first node may send the source address and the destination address of the first connection to the second network device. Similarly, another node may also send, to the second network device, a source address and a destination address corresponding to an established connection in the physical path that passes through the second network device. Therefore, the second network device obtains a plurality of connections in the physical path that passes through the second network device, and source addresses and destination addresses that separately correspond to the plurality of connections.

For example, the device connection information is a table maintained by the first network device or the second network device. The table includes information such as the source addresses and the destination addresses that separately correspond to the plurality of connections, and a port and a link that correspond to each connection. After sensing the network fault, the first network device or the second network device looks up the table based on the location of the network fault, and determines the first connection based on a table lookup result. For example, if the location of the network fault is a port 1, a connection corresponding to the port 1 in the table is obtained through table lookup, and the connection corresponding to the port 1 is the first connection; or if the location of the network fault is a link 1, a connection corresponding to the link 1 in the table is obtained through table lookup, and the connection corresponding to the link 1 is the first connection.

Step 303: The first node receives the disconnection request packet that corresponds to the first connection and that is sent by the first network device, and disconnects the first connection based on the disconnection request packet.

After receiving the disconnection request packet that corresponds to the first connection and that is sent by the first network device, the first node may sense the network fault based on the disconnection request packet. In addition to disconnecting the first connection, the first node may perform corresponding service fault recovery processing based on the sensed network fault. Optionally, the first node may switch, to a second connection for transmission, a service transmitted over the first connection, where the second connection is a connection that is not affected by the network fault, that is, the second connection is a connection over which normal transmission can be performed, to reduce a degree of impairment of service transmission performance. A source address and a destination address of the second connection may be the same as or different from the source address and the destination address of the first connection. For example, when an access link of a destination port A of the first connection is faulty, the destination address of the second connection to which the service is switched may be an address of a destination port B.

In this embodiment of this application, after receiving the disconnection request packet that corresponds to the first connection and that is sent by the first network device, the first node may further return the disconnection response packet to the first network device. The disconnection response packet is also compatible with the standard protocol, and the disconnection response packet is a response packet for the disconnection request packet. Therefore, the first network device can receive the disconnection response packet returned by the first node, and confirm, based on the disconnection response packet, that the disconnection request packet has been successfully sent. Transmission reliability of the disconnection response packet is improved by using a response mechanism of the disconnection response packet. Because the disconnection response packet is also compatible with the standard protocol, the method is also applicable to a complex service environment of a multi-scenario system, and implementation universality and flexibility of the method are improved.

Optionally, when the standard protocol is the RDMA protocol, the disconnection response packet may be a DisconnectReply packet of the RDMA protocol. When the standard protocol is the TCP, the disconnection response packet may be a FIN-ACK packet of the TCP. For example, any disconnection request packet is a DisconnectReply packet of the RDMA protocol. A packet format of the disconnection response packet may also be shown in FIG. 4. A difference from the disconnection request packet lies in that an attributed ID in an InfiniBand packet header indicates that an attribute of the packet is a disconnection response. For example, a value of the attributed ID is 0x16 in hexadecimal notation or 22 in decimal notation. A value of an LCID is exchanged with a value of an RCID. For example, the LCID may indicate the address of the second node, and the RCID may indicate the address of the first node.

In a possible application scenario, a connection can be disconnected only after a bidirectional disconnection. In this scenario, that the first node disconnects the first connection based on the disconnection request packet includes: The first node sends the disconnection request packet, for example, a DisconnectRequest packet of the RDMA protocol, for the first connection to the first network device; and the first network device returns the disconnection response packet, for example, a DisconnectReply packet of the RDMA protocol, corresponding to the disconnection request packet to the first node. In the bidirectional disconnection manner, disconnection accuracy can be improved.

Optionally, after receiving the disconnection request packet that corresponds to the first connection and that is sent by the first network device, the first node may re-initiate a connection establishment request. If a connection that the first node requests to establish is a connection affected by the network fault, for example, the first connection, the first network device may directly reject the connection establishment request when the network fault still exists, thereby improving processing efficiency in an interaction process of connection establishment, and also improving accuracy of connection establishment.

For example, the first node sends a connection establishment request packet to the first network device, where the connection establishment request packet is for re-establishing the first connection. After receiving the connection establishment request packet, the first network device sends a connection establishment reject packet corresponding to the connection establishment request packet to the first node. When identifying that the network fault still exists, the first network device may send the connection establishment reject packet corresponding to the connection establishment request packet to the first node. Alternatively, if the first network device considers that the network fault still exists within reference duration after sending the disconnection request packet to the first node, the first network device sends the connection establishment reject packet corresponding to the connection establishment request packet to the first node. Alternatively, the first network device sends the connection establishment reject packet corresponding to the connection establishment request packet to the first node within reference duration after sending the disconnection request packet to the first node and when the first network device identifies that the network fault still exists. In this way, when the network fault still exists, the first network device may directly reject the request that is initiated by the first node and that is for establishing the first connection, thereby improving interaction efficiency in a connection establishment process.

The reference duration may be set based on experience or flexibly adjusted based on an application scenario. Optionally, outside the reference duration after the first network device sends the disconnection request packet to the first node, the first network device does not send the connection establishment reject packet corresponding to the connection establishment request packet to the first node after receiving the connection establishment request packet. Therefore, incorrect identification of the network fault is prevented by setting the reference duration.

For example, the first network device starts a timer after sending the disconnection request packet to the first node, where a value of the timer is the reference duration; and if the timer does not expire and it is identified that the network fault still exists, sends the connection establishment reject packet corresponding to the connection establishment request packet to the first node; if the timer does not expire, directly considers that the network fault still exists, and sends the connection establishment reject packet corresponding to the connection establishment request packet to the first node; or if the timer expires, skips sending the connection establishment reject packet corresponding to the connection establishment request packet to the first node. When the standard protocol is the RDMA protocol, the connection establishment request packet may be a connection request (ConnectRequest) packet of the RDMA protocol, and the connection establishment reject packet may be a connection reject (ConnectReject) packet of the RDMA protocol.

In this embodiment of this application, for a case in which the first network device receives the notification packet sent by the second network device, in another implementation, the first node may directly send a disconnection response packet to the second network device, and the second network device receives the disconnection response packet. In a bidirectional disconnection scenario, alternatively, the first node may directly send a disconnection request packet for the first connection to the second network device, and the first network device returns a disconnection response packet corresponding to the disconnection request packet to the first node. Similarly, in a connection re-establishment scenario, the first node may send a connection establishment request packet to the second network device, where the connection establishment request packet is for re-establishing the first connection. After receiving the connection establishment request packet, the second network device sends a connection establishment reject packet corresponding to the connection establishment request packet to the first node.

According to the troubleshooting method shown in FIG. 3, when determining that a network fault occurs, the network device may quickly send a disconnection request packet to an end node corresponding to a connection affected by the network fault, to quickly trigger the end node to process the network fault, thereby reducing transmission impact caused by the network fault on a service, implementing fast fault perception and fast service recovery of the end node, and improving network reliability. In addition, because the disconnection request packet is compatible with the standard protocol, code, a new protocol, a proprietary protocol, and the like do not need to be configured. Therefore, the method is applicable to a complex service environment of a multi-scenario system, and implementation universality and flexibility of the method are improved.

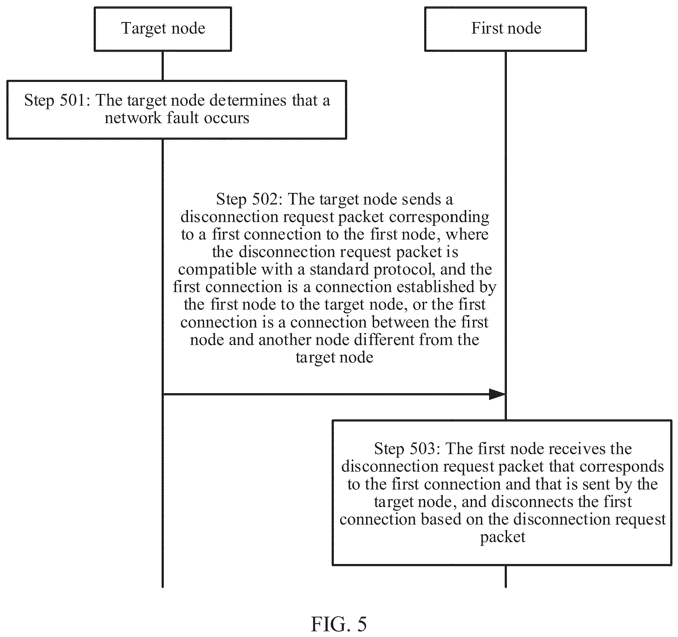

Refer to FIG. 5. FIG. 5 is a diagram of interaction of a troubleshooting method according to an embodiment of this application. The method may be applied to the implementation environment shown in FIG. 2. For example, an example in which any two nodes shown in FIG. 2 interact to perform the method is used for description. The any two nodes include a target node and a first node, the target node is a node that sends a disconnection request packet, and the first node is a node that needs to perform disconnection. As shown in FIG. 5, the troubleshooting method includes but is not limited to the following step 501 to step 503.

Step 501: The target node determines that a network fault occurs.

In this embodiment of this application, for an implementation in which the target node determines that the network fault occurs, refer to the implementation in which the first network device determines that the network fault occurs in step 301. To be specific, the target node may detect that the network fault occurs, or may determine, based on a received notification packet sent by a second network device, that the network fault occurs. Details are not described herein again.

Step 502: The target node sends a disconnection request packet corresponding to a first connection to the first node, where the disconnection request packet is compatible with a standard protocol, and the first connection is a connection established by the first node to the target node, or the first connection is a connection between the first node and another node different from the target node.

In this embodiment of this application, for an implementation in which the target node sends the disconnection request packet corresponding to the first connection to the first node, refer to the implementation in which the first network device sends the disconnection request packet corresponding to the first connection to the first node in step 302. To be specific, the target node detects the network fault, determines the first connection and the first node based on maintained device connection information, and sends the disconnection request packet corresponding to the first connection to the first node. Alternatively, the target node receives a notification packet sent by the second network device, determines the first connection and the first node based on faulty connection information and maintained device connection information in the notification packet, and sends the disconnection request packet corresponding to the first connection to the first node. Details are not described herein again.

When the first connection is a connection established by the first node to the target node, the first node is an active establishment party of the first connection, and the target node is a passive establishment party of the first connection. In a related technology, the first node usually needs to start a heartbeat keepalive mechanism, intermittently send a heartbeat packet to the target node, and sense, depending on whether there is a response to the heartbeat packet, whether the first connection is abnormal. In this embodiment of this application, when detecting the network fault, the target node may directly send the disconnection request packet to the first node, and the first node does not need to perform active detection. This saves network resources required for sending a heartbeat packet, improves a speed of sensing a fault by an active party of connection establishment, and further improves troubleshooting efficiency.

When the first connection is a connection between the first node and another node different from the target node, the target node is not an end node at two ends of the first connection. The target node may detect the network fault that affects the first connection, and the target node may also receive a network fault that affects the first connection and that is notified by the second network device. In conclusion, the target node can send the disconnection request packet to a corresponding end node in a timely manner, thereby improving a speed of sensing a fault by the end node, and improving efficiency of troubleshooting performed by the end node.

Step 503: The first node receives the disconnection request packet that corresponds to the first connection and that is sent by the target node, and disconnects the first connection based on the disconnection request packet.

In this embodiment of this application, for an implementation in which the first node receives the disconnection request packet that corresponds to the first connection and that is sent by the target node, and disconnects the first connection based on the disconnection request packet, refer to the implementation in which the first node receives the disconnection request packet that corresponds to the first connection and that is sent by the first network device, and disconnects the first connection based on the disconnection request packet in step 303. Details are not described herein again.

According to the troubleshooting method shown in FIG. 5, when determining that a network fault occurs, the target node may quickly send a disconnection request packet to an end node corresponding to a connection affected by the network fault, to quickly trigger the end node to process the network fault, thereby reducing transmission impact caused by the network fault on a service, implementing fast fault perception and fast service recovery of the end node, and improving network reliability. In addition, because the disconnection request packet is compatible with the standard protocol, code, a new protocol, a proprietary protocol, and the like do not need to be configured. Therefore, the method is applicable to a complex service environment of a multi-scenario system, and implementation universality and flexibility of the method are improved.

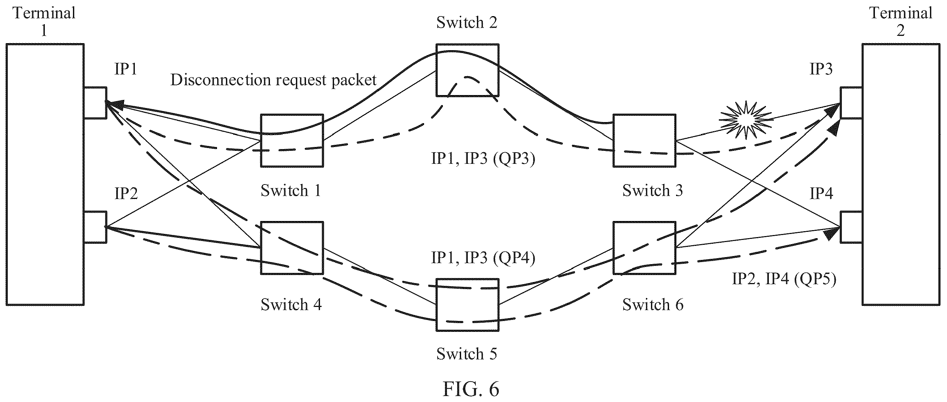

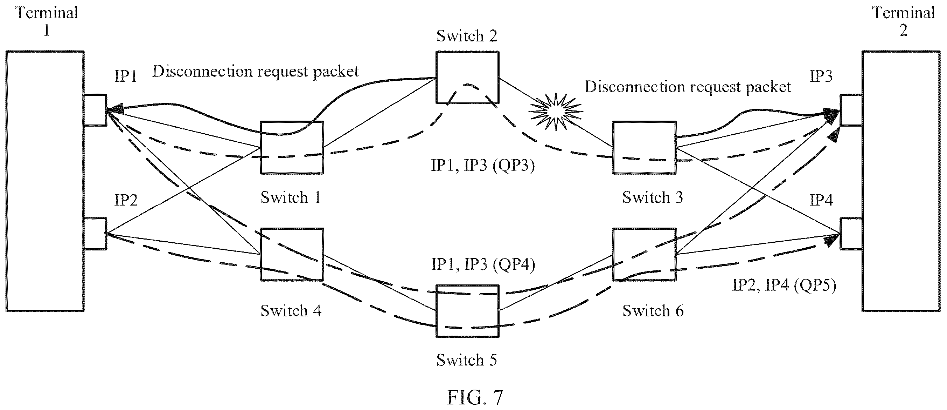

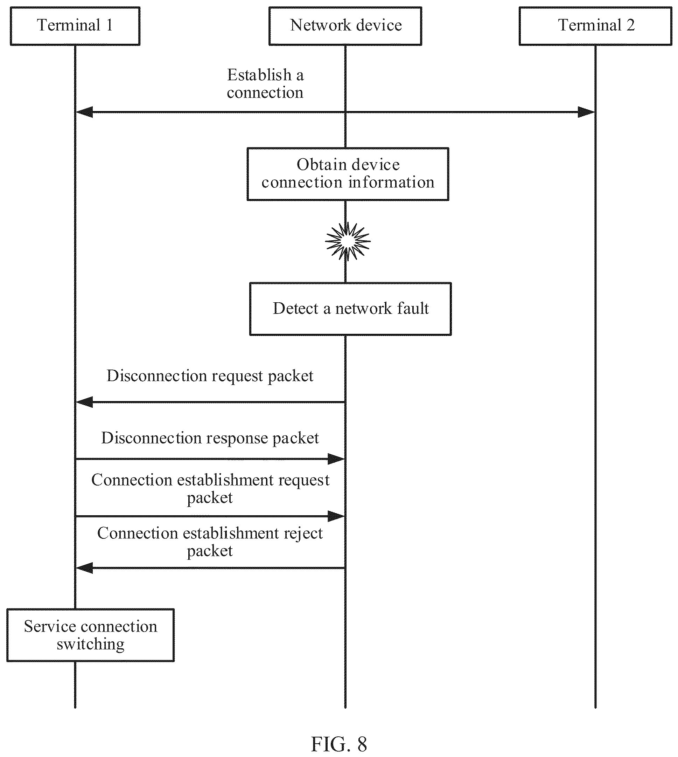

The following describes the troubleshooting method provided in embodiments of this application by using an example in which a device that detects a network fault and a device that sends a disconnection request packet are a same device, the same device may be a network device and two end nodes that establish a connection are a terminal 1 and a terminal 2. Refer to a diagram of a network fault shown in FIG. 6 or FIG. 7. Three connections are established between the terminal 1 and the terminal 2 by using a switch 1 to a switch 6. The three connections are a QP 3, a QP 4, and a QP 5. A source address of the QP 3 is IP1, and a destination address of the QP 3 is IP3. A source address of the QP 4 is IP1, and a destination address of the QP 4 is IP3. A source address of the QP 5 is IP2, and a destination address of the QP 5 is IP4. In FIG. 6, an access link directly connected between the switch 3 and the terminal 2 is faulty. In FIG. 7, a link between the switch 2 and the switch 3 is faulty. For the network faults shown in FIG. 6 and FIG. 7, with reference to a troubleshooting process shown in FIG. 8, the troubleshooting method provided in embodiments of this application is described by using an example.

In the troubleshooting process shown in FIG. 8, a first connection is first established between the terminal 1 and the terminal 2 via a network device, and the network device obtains device connection information. The device connection information includes a source address, namely, an address of the terminal 1, and a destination address, namely, an address of the terminal 2, of the first connection. For example, as shown in FIG. 6 and FIG. 7, the first connection established between the terminal 1 and the terminal 2 is the QP 3, and a device that detects a network fault and sends a disconnection request packet is the switch 3 shown in FIG. 6 and FIG. 7.

Optionally, a manner in which the network device obtains the device connection information includes: The network device actively obtains connection information between terminals in a connection establishment process between the terminals; the terminal 1 or the terminal 2 transfers connection information for connection establishment to the network device after a connection between the terminals is established; or the device connection information is configured for the network device in an out-of-band configuration manner.

Then, when detecting that a network fault occurs, the network device determines a connection affected by the network fault. There may be one or more connections affected by the network fault. For example, the connection affected by the network fault is the first connection. The network device constructs a disconnection request packet for the first connection based on connection information of the first connection, and sends the disconnection request packet to the terminal 1 and the terminal 2 to which the first connection belongs, so that the terminal 1 and the terminal 2 disconnect the first connection.

For example, if a network fault causes unreachability between the network device and one terminal of the first connection, the network device sends a disconnection request packet to the other reachable terminal of the first connection. As shown in FIG. 6, the access link directly connected between the switch 3 and the terminal 2 is faulty. The switch 3 detects that the access link is faulty, and the terminal 2 is unreachable. The switch 3 sends a disconnection request packet to the terminal 1. For another example, if a network fault occurs between the network device and one terminal of the first connection, the network device sends a disconnection request packet to the other terminal of the first connection. As shown in FIG. 7, the link between the switch 2 and the switch 3 is faulty, and both the switch 2 and the switch 3 detect the link fault. The switch 2 sends a disconnection request packet to the terminal 1, and the switch 3 sends a disconnection request packet to the terminal 2.

When the network device shown in FIG. 8 sends the disconnection request packet to the terminal 1, the terminal 1 returns, to the network device, a disconnection response packet corresponding to the disconnection request packet. The network device may not process the received disconnection response packet, or may discard the disconnection response packet. Optionally, the terminal 1 sends a connection establishment request packet to the network device. If a connection to be established by using the connection establishment request packet is still affected by the network fault, the network device constructs a corresponding connection establishment reject packet for the received connection establishment request packet, and returns the connection establishment reject packet to the terminal 1, to reject a connection establishment request of the terminal 1.

Then, the terminal 1 senses the network fault based on the received disconnection request packet, disconnects the faulty connection indicated by the disconnection request packet, and performs corresponding service fault recovery processing. For example, services are switched from a faulty connection to another available connection for transmission. For example, as shown in FIG. 6 or FIG. 7, the terminal 1 switches a service to the QP 4 for transmission. In this case, a source address and a destination address of the QP 4 are the same as those of the QP 3. Alternatively, the terminal 1 switches a service to the QP 5 for transmission. In this case, a source address and a destination address of the QP 5 are different from those of the QP 3. In this way, fault recovery is implemented by changing a source address or a destination address. In this embodiment of this application, for a specific implementation of the troubleshooting process shown in FIG. 8, refer to the specific implementation of the troubleshooting method shown in FIG. 3 or FIG. 5. Details are not described herein again.

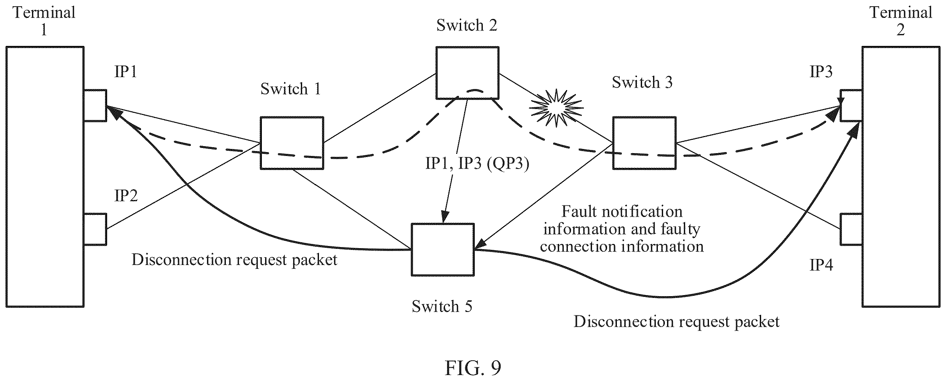

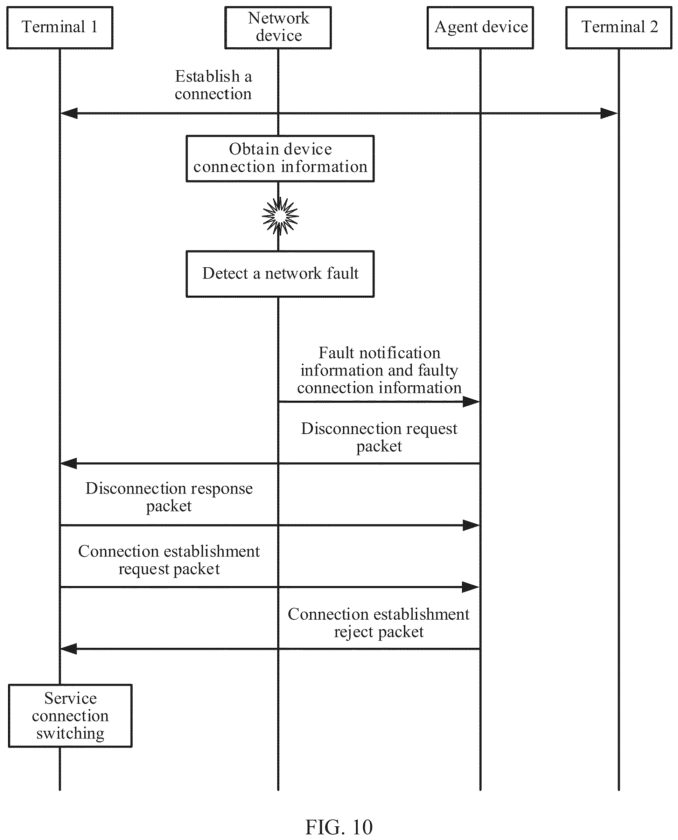

The troubleshooting method provided in embodiments of this application is described by using an example in which a device that detects a network fault and a device that sends a disconnection request packet are different devices, for example, the device that detects the network fault is a network device and the device that sends the disconnection request packet is an agent device, the agent device may be any network device or any terminal, and two end nodes that establish a connection are a terminal 1 and a terminal 2. Refer to a diagram of a network fault shown in FIG. 9. A connection QP 3 is established between the terminal 1 and the terminal 2, where a source address of the QP 3 is IP1, and a destination address of the QP 3 is IP3. In FIG. 9, a link between a switch 2 and a switch 3 is faulty. For the network fault shown in FIG. 9, with reference to a troubleshooting process shown in FIG. 10, the troubleshooting method provided in embodiments of this application is described by using an example.

As shown in FIG. 10, first, a first connection is established between the terminal 1 and the terminal 2 via a network device. This process is the same as the process of establishing the first connection between the terminal 1 and the terminal 2 via the network device shown in FIG. 8. Details are not described herein again. Then, when detecting that a network fault occurs, the network device determines a connection affected by the network fault. That the connection affected by the network fault is the first connection is still used as an example. The network device notifies the agent device of fault notification information and faulty connection information. The agent device constructs a disconnection request packet for the first connection, and sends the disconnection request packet to the terminal 1 and the terminal 2 to which the first connection belongs, so that the terminal 1 and the terminal 2 disconnect the first connection.

For example, the first connection established between the terminal 1 and the terminal 2 is the QP 3 shown in FIG. 9. The network device is the switch 3 shown in FIG. 9, and the agent device is a switch 5 shown in FIG. 9. When the switch 3 detects that the link between the switch 3 and the switch 2 is faulty, the switch 3 sends fault notification information and faulty connection information to the switch 5, and the switch 5 sends a disconnection request packet to the terminal 1 and the terminal 2. Optionally, the switch 2 also detects that the link between the switch 3 and the switch 2 is faulty, and the switch 2 also sends fault notification information and faulty connection information to the switch 5. The switch 5 receives two pieces of fault notification information and two pieces of faulty connection information sent by the switch 3 and the switch 2. Based on the two pieces of fault notification information and the two pieces of faulty connection information, the switch 5 may send two disconnection request packets to the terminal 1 and the terminal 2 separately, or may aggregate the two pieces of fault notification information and the two pieces of faulty connection information, to send one disconnection request packet to the terminal 1 and the terminal 2, to avoid repeated sending of the disconnection request packet.

For another example, the agent device may alternatively be the terminal 2 shown in FIG. 9. When the switch 3 detects that the link between the switch 3 and the switch 2 is faulty, the switch 3 sends fault notification information and faulty connection information to the terminal 2, and the terminal 2 sends a disconnection request packet to the terminal 1.

In the troubleshooting process shown in FIG. 10, an example in which a disconnection request packet is sent to the terminal 1 is used for illustration. An operation performed by the terminal 1 after receiving the disconnection request packet is the same as an operation performed by the terminal 1 after receiving the disconnection request packet shown in FIG. 8. Details are not described herein again. If a connection establishment request packet sent by the terminal 1 arrives at the network device, the network device may return a connection establishment reject packet corresponding to the connection establishment request packet; or if a connection establishment request packet sent by the terminal 1 arrives at the agent device, the agent device may return a connection establishment reject packet corresponding to the connection establishment request packet. This is not limited in embodiments of this application. In this embodiment of this application, for a specific implementation of the troubleshooting process shown in FIG. 10, refer to the specific implementation of the troubleshooting method shown in FIG. 3 or FIG. 5. Details are not described herein again.

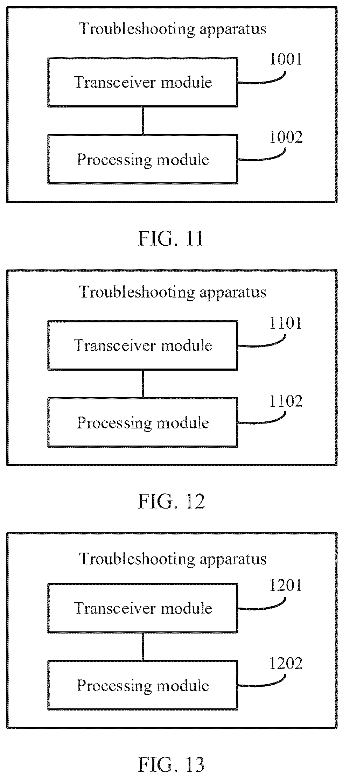

The troubleshooting method in embodiments of this application is described above. Corresponding to the method, an embodiment of this application further provides a troubleshooting apparatus. FIG. 11 is a diagram of a structure of a troubleshooting apparatus according to an embodiment of this application. The apparatus is used in a first network device, and the first network device is the first network device shown in FIG. 3. Based on a plurality of modules shown in FIG. 11 below, the troubleshooting apparatus shown in FIG. 11 can perform all or a part of operations performed by the first network device. It should be understood that the apparatus may include more additional modules than the shown modules, or some of the shown modules are omitted. This is not limited in this embodiment of this application. As shown in FIG. 11, the apparatus includes:
a transceiver module 1001, configured to perform a receiving and/or sending related operation performed by the first network device in the method shown in FIG. 3; and
a processing module 1002, configured to perform an operation other than the receiving and/or sending related operation performed by the first network device in the method shown in FIG. 3.

In a possible implementation, the transceiver module 1001 includes a receiving module and/or a sending module. The receiving module is configured to perform a receiving related operation, and the sending module is configured to perform a sending related operation.

In a possible implementation, the processing module 1002 is configured to determine that a network fault occurs.

The transceiver module 1001 is configured to send a disconnection request packet corresponding to a first connection to a first node, where the first connection is a connection between the first node and another node, the disconnection request packet is compatible with a standard protocol, and the disconnection request packet indicates the first node to disconnect the first connection.

In a possible implementation, the disconnection request packet is a DisconnectRequest packet of an RDMA protocol or a FIN packet of a TCP.

In a possible implementation, the processing module 1002 is configured to detect that the network fault occurs.

In a possible implementation, the processing module 1002 is further configured to determine the first node based on device connection information, where the device connection information includes source addresses and destination addresses that separately correspond to a plurality of connections.

In a possible implementation, the transceiver module 1001 is configured to receive a notification packet sent by a second network device, where the notification packet includes fault notification information, and the fault notification information indicates that the network fault occurs.

The processing module 1002 is configured to determine, based on the fault notification information, that the network fault occurs.

In a possible implementation, the notification packet further includes faulty connection information, where the faulty connection information indicates the first connection. The processing module 1002 is further configured to determine the first node based on the faulty connection information and device connection information, where the device connection information includes source addresses and destination addresses that separately correspond to a plurality of connections.

In a possible implementation, the device connection information is obtained based on a packet exchanged in a process of establishing a connection between nodes; or the device connection information is obtained based on local connection information sent by the first node.

In a possible implementation, the transceiver module 1001 is further configured to receive a disconnection response packet sent by the first node, where the disconnection response packet is compatible with the standard protocol, and the disconnection response packet is a response packet for the disconnection request packet.

In a possible implementation, the disconnection response packet is a DisconnectReply packet of the RDMA protocol or a FIN-ACK packet of the TCP.

In a possible implementation, the transceiver module 1001 is further configured to: receive a connection establishment request packet sent by the first node, where the connection establishment request packet is for re-establishing the first connection; and send a connection establishment reject packet corresponding to the connection establishment request packet to the first node.

FIG. 12 is a diagram of a structure of a troubleshooting apparatus according to an embodiment of this application. The apparatus is used in a target node, and the target node is the target node shown in FIG. 5. Based on a plurality of modules shown in FIG. 12 below, the troubleshooting apparatus shown in FIG. 12 can perform all or a part of operations performed by the target node. It should be understood that the apparatus may include more additional modules than the shown modules, or some of the shown modules are omitted. This is not limited in this embodiment of this application. As shown in FIG. 12, the apparatus includes:
a transceiver module 1101, configured to perform a receiving and/or sending related operation performed by the target node in the method shown in FIG. 5; and
a processing module 1102, configured to perform an operation other than the receiving and/or sending related operation performed by the target node in the method shown in FIG. 5.

In a possible implementation, the transceiver module 1101 includes a receiving module and/or a sending module. The receiving module is configured to perform a receiving related operation, and the sending module is configured to perform a sending related operation.

In a possible implementation, the processing module 1102 is configured to determine that a network fault occurs.

The transceiver module 1101 is configured to send a disconnection request packet corresponding to a first connection to a first node, where the disconnection request packet is compatible with a standard protocol, and the disconnection request packet indicates the first node to disconnect the first connection, where the first connection is a connection established by the first node to the target node, or the first connection is a connection between the first node and another node different from the target node.

In a possible implementation, the disconnection request packet is a DisconnectRequest packet of an RDMA protocol or a FIN packet of a TCP.

In a possible implementation, the processing module 1102 is configured to detect that the network fault occurs.

In a possible implementation, the processing module 1102 is further configured to determine the first node based on device connection information, where the device connection information includes source addresses and destination addresses that separately correspond to a plurality of connections.

In a possible implementation, the transceiver module 1101 is configured to receive a notification packet sent by a second network device, where the notification packet includes fault notification information, and the fault notification information indicates that the network fault occurs.

The processing module 1102 is configured to determine, based on the fault notification information, that the network fault occurs.

In a possible implementation, the notification packet further includes faulty connection information, where the faulty connection information indicates the first connection. The processing module 1102 is further configured to determine the first node based on the faulty connection information and device connection information, where the device connection information includes source addresses and destination addresses that separately correspond to a plurality of connections.

In a possible implementation, the device connection information is obtained based on a packet exchanged in a process of establishing a connection between nodes; or the device connection information is obtained based on local connection information sent by the first node.

In a possible implementation, the transceiver module 1101 is further configured to receive a disconnection response packet sent by the first node, where the disconnection response packet is compatible with the standard protocol, and the disconnection response packet is a response packet for the disconnection request packet.

In a possible implementation, the disconnection response packet is a DisconnectReply packet of the RDMA protocol or a FIN-ACK packet of the TCP.

In a possible implementation, the transceiver module 1101 is further configured to: receive a connection establishment request packet sent by the first node, where the connection establishment request packet is for re-establishing the first connection; and send a connection establishment reject packet corresponding to the connection establishment request packet to the first node.

FIG. 13 is a diagram of a structure of a troubleshooting apparatus according to an embodiment of this application. The apparatus is used in a first node, and the first node is the first node shown in FIG. 3 or FIG. 5. Based on a plurality of modules shown in FIG. 13 below, the troubleshooting apparatus shown in FIG. 13 can perform all or a part of operations performed by the first node. It should be understood that the apparatus may include more additional modules than the shown modules, or some of the shown modules are omitted. This is not limited in this embodiment of this application. As shown in FIG. 13, the apparatus includes:
a transceiver module 1201, configured to perform a receiving and/or sending related operation performed by the first node in the method shown in FIG. 3 or FIG. 5; and
a processing module 1202, configured to perform an operation other than the receiving and/or sending related operation performed by the first node in the method shown in FIG. 3 or FIG. 5.

In a possible implementation, the transceiver module 1201 includes a receiving module and/or a sending module. The receiving module is configured to perform a receiving related operation, and the sending module is configured to perform a sending related operation.

In a possible implementation, the transceiver module 1201 is configured to receive a disconnection request packet corresponding to a first connection, where the first connection is a connection between the first node and another node, and the disconnection request packet is compatible with a standard protocol.

The processing module 1202 is configured to disconnect the first connection based on the disconnection request packet.

In a possible implementation, the disconnection request packet is a DisconnectRequest packet of an RDMA protocol or a FIN packet of a TCP.

In a possible implementation, the transceiver module 1201 is further configured by the first node to send a disconnection response packet, where the disconnection response packet is compatible with the standard protocol, and the disconnection response packet is a response packet for the disconnection request packet.

In a possible implementation, the disconnection response packet is a DisconnectReply packet of the RDMA protocol or a FIN-ACK packet of the TCP.

In a possible implementation, the transceiver module 1201 is further configured to: send a connection establishment request packet, where the connection establishment request packet is for re-establishing the first connection; and receive a connection establishment reject packet corresponding to the connection establishment request packet.

In a possible implementation, the processing module 1202 is further configured by the first node to switch, to a second connection for transmission, a service transmitted over the first connection, where the second connection is a connection that is not affected by a network fault.

It should be understood that, when the apparatuses provided in FIG. 11 to FIG. 13 implement functions of the apparatuses, division into the foregoing functional modules is merely used as an example for description. During actual application, the foregoing functions may be allocated to different functional modules for implementation based on a requirement. In other words, an inner structure of a device is divided into different functional modules, to implement all or a part of the functions described above. In addition, the apparatuses provided in the foregoing embodiments and the method embodiments belong to a same concept. For specific implementation processes thereof, refer to the method embodiments. Details are not described herein. For effects generated by the apparatuses shown in FIG. 11 to FIG. 13, refer to the effects generated by the method shown in FIG. 3 or FIG. 5. Details are not described herein again.

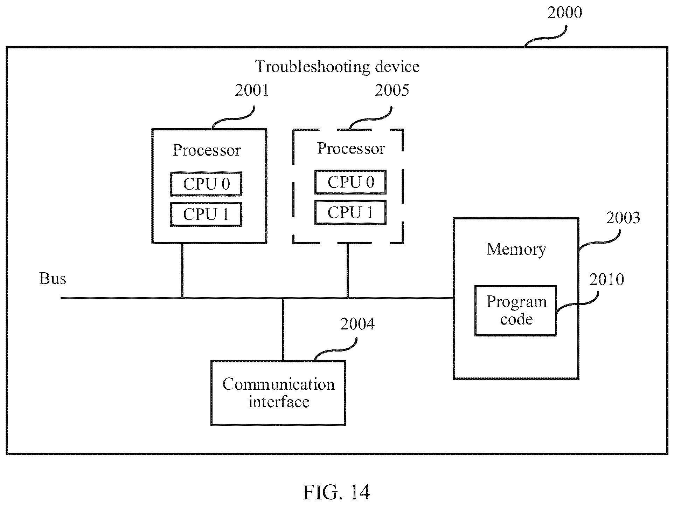

Refer to FIG. 14. FIG. 14 is a diagram of a structure of a troubleshooting device 2000 according to an example embodiment of this application. The troubleshooting device 2000 shown in FIG. 14 is configured to perform an operation related to the troubleshooting method shown in FIG. 3 or FIG. 5. The troubleshooting device 2000 is, for example, a terminal, a server, a switch, or a router. The troubleshooting device 2000 may be implemented by using a general bus architecture.

As shown in FIG. 14, the troubleshooting device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination implementing a computing function, for example, a combination including one or more microprocessors, or a combination of a DSP and a microprocessor.

Optionally, the troubleshooting device 2000 further includes a bus. The bus is configured to transfer information between components of the troubleshooting device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of indication, the bus is indicated by only one line in FIG. 14. However, it does not indicate that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other optical disk storage, optical disc storage (including a compact disc, a laser disc, an optical disc, a digital versatile disc, a Blu-ray disc, and the like), or magnetic disk storage medium, another magnetic storage device, or any other medium that can be used to carry or store desired program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus such as a transceiver, and is configured to communicate with another device or a communication network. The communication network may be an ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an ethernet (Ethernet) interface, a fast ethernet (Fast Ethernet, FE) interface, a gigabit ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The ethernet interface may be an optical interface, an electrical interface, or a combination thereof. In this embodiment of this application, the communication interface 2004 may be used by the troubleshooting device 2000 to communicate with another device.

During specific implementation, in an embodiment, the processor 2001 may include one or more CPUs, for example, a CPU 0 and a CPU 1 shown in FIG. 14. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the troubleshooting device 2000 may include a plurality of processors, for example, the processor 2001 and a processor 2005 shown in FIG. 14. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the troubleshooting device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, a sensor device, or the like.

In some embodiments, the memory 2003 is configured to store program code 2010 for executing the solutions of this application, and the processor 2001 may execute the program code 2010 stored in the memory 2003. In other words, the troubleshooting device 2000 may implement, by using the processor 2001 and the program code 2010 in the memory 2003, the troubleshooting methods provided in the method embodiments. The program code 2010 may include one or more software modules. Optionally, the processor 2001 may also store program code or instructions for executing the solutions of this application.

In a specific embodiment, the troubleshooting device 2000 in this embodiment of this application may correspond to the first network device in the foregoing method embodiments, and the processor 2001 in the troubleshooting device 2000 reads instructions in the memory 2003, so that the troubleshooting device 2000 shown in FIG. 14 can perform all or a part of operations performed by the first network device.

Specifically, the processor 2001 is configured to: determine that a network fault occurs; and send a disconnection request packet corresponding to a first connection to a first node. The first connection is a connection between the first node and another node, the disconnection request packet is compatible with a standard protocol, and the disconnection request packet indicates the first node to disconnect the first connection.

For brevity, another optional implementation is not described herein again.

For another example, the troubleshooting device 2000 in this embodiment of this application may correspond to the target node in the foregoing method embodiments, and the processor 2001 in the troubleshooting device 2000 reads instructions in the memory 2003, so that the troubleshooting device 2000 shown in FIG. 14 can perform all or a part of operations performed by the target node.

Specifically, the processor 2001 is configured to: determine that a network fault occurs; and send a disconnection request packet corresponding to a first connection to a first node. The disconnection request packet is compatible with a standard protocol, and the disconnection request packet indicates the first node to disconnect the first connection, where the first connection is a connection established by the first node to the target node, or the first connection is a connection between the first node and another node different from the target node.

For brevity, another optional implementation is not described herein again.

For another example, the troubleshooting device 2000 in this embodiment of this application may correspond to the first node in the foregoing method embodiments, and the processor 2001 in the troubleshooting device 2000 reads instructions in the memory 2003, so that the troubleshooting device 2000 shown in FIG. 14 can perform all or a part of operations performed by the first node.

Specifically, the processor 2001 is configured to: receive a disconnection request packet corresponding to a first connection, where the first connection is a connection between the first node and another node, and the disconnection request packet is compatible with a standard protocol; and disconnect the first connection based on the disconnection request packet.

For brevity, another optional implementation is not described herein again.

The troubleshooting device 2000 may further correspond to the troubleshooting apparatuses shown in FIG. 11 to FIG. 13, and each functional module in the troubleshooting apparatus is implemented by using software of the troubleshooting device 2000. In other words, the functional module included in the troubleshooting apparatus is generated after the processor 2001 of the troubleshooting device 2000 reads the program code 2010 stored in the memory 2003.

Steps in the troubleshooting method shown in FIG. 3 or FIG. 5 are completed by using an integrated logic circuit of hardware in the processor of the troubleshooting device 2000, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

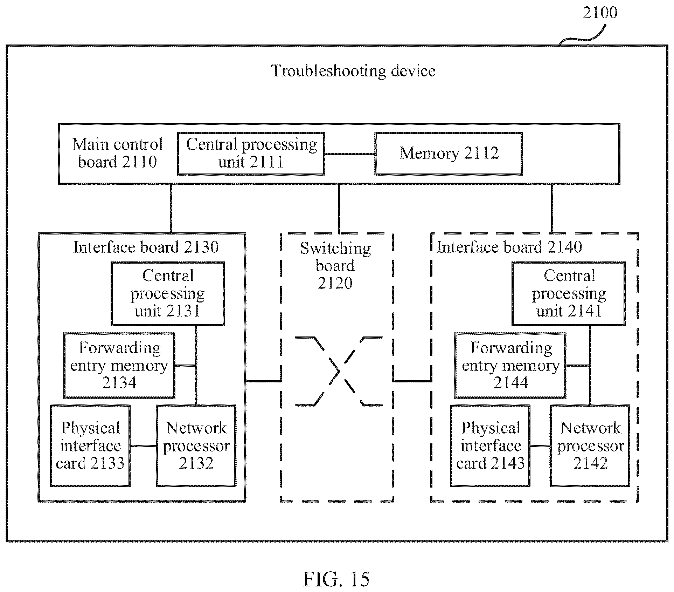

Refer to FIG. 15. FIG. 15 is a diagram of a structure of a troubleshooting device 2100 according to another example embodiment of this application. The troubleshooting device 2100 shown in FIG. 15 is configured to perform all or a part of operations related to the troubleshooting method shown in FIG. 3. The troubleshooting device 2100 is, for example, a switch or a router. The troubleshooting device 2100 may be implemented by using a general bus architecture.

As shown in FIG. 15, the troubleshooting device 2100 includes a main control board 2110 and an interface board 2130.

The main control board is also referred to as a main processing unit (main processing unit, MPU) or a route processor card (route processor card). The main control board 2110 is configured to: control and manage components in the troubleshooting device 2100, including functions of route calculation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to: provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the troubleshooting device 2100, the network processor 2132 sends the packet to a CPU (for example, the central processing unit 2131) for processing. If a destination address of the packet is not an address of the troubleshooting device 2100, the network processor 2132 finds, from a forwarding table based on the destination address, a next hop and an egress interface that correspond to the destination address, and forwards the packet to the egress interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the troubleshooting device 2100 includes a plurality of interface boards. For example, the troubleshooting device 2100 further includes an interface board 2140. The interface board 2140 includes: a central processing unit 2141, a network processor 2142, a forwarding entry memory 2144, and a physical interface card 2143. Functions and implementations of components in the interface board 2140 are the same as or similar to those of the interface board 2130. Details are not described herein again.

Optionally, the troubleshooting device 2100 further includes a switching board 2120. The switching board 2120 may also be referred to as a switch fabric unit (switch fabric unit, SFU). When the troubleshooting device 2100 has the plurality of interface boards, the switching board 2120 is configured to perform data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110 and the interface board 2130, and between the main control board 2110 and the interface board 2140. The main control board 2110 communicates with the interface board 2130 and the interface board 2140 through IPC channels.

Logically, the troubleshooting device 2100 includes a control plane and a forwarding plane. The control plane includes the main control board 2110 and the central processing unit 2111. The forwarding plane includes components that perform forwarding, such as the forwarding entry memory 2134, the physical interface card 2133, and the network processor 2132. The control plane performs functions such as a router, generating a forwarding table, processing signaling and protocol packets, and configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger number of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the network device in the centralized architecture. Optionally, the form of the network device may alternatively be a single board. That is, there is no switch fabric board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the troubleshooting device 2100 corresponds to the troubleshooting apparatus used in the first network device shown in FIG. 11. In some embodiments, the transceiver module 1001 in the troubleshooting apparatus shown in FIG. 11 is equivalent to the physical interface card 2133 in the troubleshooting device 2100, and the processing module 1002 is equivalent to the central processing unit 2111 or the network processor 2132 in the troubleshooting device 2100.

An embodiment of this application further provides a troubleshooting system. The processing system includes a first network device and a first node. Optionally, the first network device is the troubleshooting device 2000 shown in FIG. 14 or the troubleshooting device 2100 shown in FIG. 15, and the first node is the troubleshooting device 2000 shown in FIG. 14. For the troubleshooting method performed by the first network device and the first node, refer to related descriptions in the embodiment shown in FIG. 3. Details are not described herein again.

An embodiment of this application further provides a troubleshooting system. The processing system includes a target node and a first node. Optionally, the target node and the first node may be the troubleshooting device 2000 shown in FIG. 14. For the troubleshooting method performed by the target node and the first node, refer to related descriptions in the embodiment shown in FIG. 5. Details are not described herein again.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method that needs to be performed by the first network device.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method that needs to be performed by the target node.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method that needs to be performed by the first node.

It should be understood that the processor may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing troubleshooting methods.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to: invoke instructions from a memory and run the instructions stored in the memory, to enable a communication device on which the chip is installed to perform any one of the foregoing troubleshooting methods.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing troubleshooting methods.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive)), or the like.

A person of ordinary skill in the art may be aware that, this application can be implemented by using software, hardware, firmware, or any combination thereof with reference to method steps and modules described in embodiments disclosed in this specification. To clearly describe interchangeability between the hardware and the software, steps and compositions of embodiments have been generally described in terms of functions in the foregoing descriptions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or a part of the steps of embodiments may be implemented by hardware or a program instructing related hardware. The program may be stored in a computer-readable storage medium. The storage medium may include: a read-only memory, a magnetic disk, or an optical disc.

When software is used to implement embodiments, all or a part of embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division of modules is merely division of logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of' in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if' may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based on only A, and B may alternatively be determined based on A and/or other information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A troubleshooting method, wherein the method is applied to a first network device, and the method comprises:
determining that a network fault occurs; and
sending a disconnection request packet corresponding to a first connection to a first node, wherein the first connection is a connection between the first node and another node, the disconnection request packet is compatible with a standard protocol, and the disconnection request packet indicates the first node to disconnect the first connection.

2. A troubleshooting method, wherein the method is applied to a target node, and the method comprises:
determining that a network fault occurs; and
sending a disconnection request packet corresponding to a first connection to a first node, wherein the disconnection request packet is compatible with a standard protocol, and the disconnection request packet indicates the first node to disconnect the first connection, wherein the first connection is a connection established by the first node to the target node, or the first connection is a connection between the first node and another node different from the target node.

3. The method according to claim 1 or 2, wherein the disconnection request packet is a disconnection request DisconnectRequest packet of a remote direct memory access RDMA protocol or a finish FIN packet of a transmission control protocol TCP.

4. The method according to any one of claims 1 to 3, wherein the determining that a network fault occurs comprises:
detecting that the network fault occurs.

5. The method according to claim 4, wherein after the determining that a network fault occurs, the method further comprises:
determining the first node based on device connection information, wherein the device connection information comprises source addresses and destination addresses that separately correspond to a plurality of connections.

6. The method according to any one of claims 1 to 3, wherein the determining that a network fault occurs comprises:
receiving a notification packet sent by a second network device, wherein the notification packet comprises fault notification information, and the fault notification information indicates that the network fault occurs; and
determining, based on the fault notification information, that the network fault occurs.

7. The method according to claim 6, wherein the notification packet further comprises faulty connection information, and the faulty connection information indicates the first connection; and after the determining that a network fault occurs, the method further comprises:
determining the first node based on the faulty connection information and device connection information, wherein the device connection information comprises source addresses and destination addresses that separately correspond to a plurality of connections.

8. The method according to claim 5 or 7, wherein the device connection information is obtained based on a packet exchanged in a process of establishing a connection between nodes; or the device connection information is obtained based on local connection information sent by the first node.

9. The method according to any one of claims 1 to 8, wherein the method further comprises:
receiving a disconnection response packet sent by the first node, wherein the disconnection response packet is compatible with the standard protocol, and the disconnection response packet is a response packet for the disconnection request packet.

10. The method according to claim 9, wherein the disconnection response packet is a disconnection reply DisconnectReply packet of the remote direct memory access RDMA protocol or a finish acknowledge FIN-ACK packet of the transmission control protocol TCP.

11. The method according to any one of claims 1 to 10, wherein the method further comprises:
receiving a connection establishment request packet sent by the first node, wherein the connection establishment request packet is for re-establishing the first connection; and
sending a connection establishment reject packet corresponding to the connection establishment request packet to the first node.

12. A troubleshooting method, wherein the method comprises:
receiving, by a first node, a disconnection request packet corresponding to a first connection, wherein the first connection is a connection between the first node and another node, and the disconnection request packet is compatible with a standard protocol; and
disconnecting, by the first node, the first connection based on the disconnection request packet.

13. The method according to claim 12, wherein the disconnection request packet is a disconnection request DisconnectRequest packet of a remote direct memory access RDMA protocol or a finish FIN packet of a transmission control protocol TCP.

14. The method according to claim 12 or 13, wherein after the receiving, by a first node, a disconnection request packet corresponding to a first connection, the method further comprises:
sending, by the first node, a disconnection response packet, wherein the disconnection response packet is compatible with the standard protocol, and the disconnection response packet is a response packet for the disconnection request packet.

15. The method according to claim 14, wherein the disconnection response packet is a disconnection reply DisconnectReply packet of the remote direct memory access RDMA protocol or a finish acknowledge FIN-ACK packet of the transmission control protocol TCP.

16. The method according to any one of claims 12 to 15, wherein after the receiving, by a first node, a disconnection request packet corresponding to a first connection, the method further comprises:
sending, by the first node, a connection establishment request packet, wherein the connection establishment request packet is for re-establishing the first connection; and
receiving, by the first node, a connection establishment reject packet corresponding to the connection establishment request packet.

17. The method according to any one of claims 12 to 16, wherein after the disconnecting, by the first node, the first connection based on the disconnection request packet, the method further comprises:
switching, by the first node to a second connection for transmission, a service transmitted over the first connection, wherein the second connection is a connection that is not affected by a network fault.

18. A troubleshooting apparatus, wherein the apparatus is used in a first network device, and the apparatus comprises:
a transceiver module, configured to perform a receiving and/or sending related operation performed by the first network device in the troubleshooting method according to any one of claims 1 and 3 to 11; and
a processing module, configured to perform an operation other than the receiving and/or sending related operation performed by the first network device in the troubleshooting method according to any one of claims 1 and 3 to 11.

19. A troubleshooting apparatus, wherein the apparatus is used in a target node, and the apparatus comprises:
a transceiver module, configured to perform a receiving and/or sending related operation performed by the target node in the troubleshooting method according to any one of claims 2 to 11; and
a processing module, configured to perform an operation other than the receiving and/or sending related operation performed by the target node in the troubleshooting method according to any one of claims 2 to 11.

20. A troubleshooting apparatus, wherein the apparatus is used in a first node, and the apparatus comprises:
a transceiver module, configured to perform a receiving and/or sending related operation performed by the first node in the troubleshooting method according to any one of claims 12 to 17; and
a processing module, configured to perform an operation other than the receiving and/or sending related operation performed by the first node in the troubleshooting method according to any one of claims 12 to 17.

21. A troubleshooting device, wherein the device comprises a processor, the processor is coupled to a memory, the memory stores at least one program instruction or code, and the at least one program instruction or the code is loaded and executed by the processor, to enable the device to implement the troubleshooting method according to any one of claims 1 to 17.

22. A troubleshooting system, wherein the troubleshooting system comprises a first network device and a first node, wherein
the first network device is configured to perform the method according to any one of claims 1 and 3 to 11, and the first node is configured to perform the method according to any one of claims 12 to 17.

23. A troubleshooting system, wherein the troubleshooting system comprises a target node and a first node, wherein
the target node is configured to perform the method according to any one of claims 2 to 11, and the first node is configured to perform the method according to any one of claims 12 to 17.

24. A computer-readable storage medium, wherein the computer storage medium stores at least one instruction, and the at least one instruction is loaded and executed by a processor, to enable a computer to implement the troubleshooting method according to any one of claims 1 to 17.

25. A computer program product, wherein the computer program product comprises computer program code, and the computer program code is loaded and executed by a computer, to enable the computer to implement the troubleshooting method according to any one of claims 1 to 17.
